(19) Europäisches Patentamt
European Patent Office
Office européen des brevets

(11) Veröffentlichungsnummer: **0 021 003**
**B1**

(12) # EUROPÄISCHE PATENTSCHRIFT

(45) Veröffentlichungstag der Patentschrift: **09.02.83**

(51) Int. Cl.³: **B 01 F 17/26** // C07C143/74, C11D1/28, D06M13/30, G03C1/34

(21) Anmeldenummer: **80102682.4**

(22) Anmeldetag: **14.05.80**

(54) **Verwendung von Perfluoralkansulfonamid-Salzen als Tenside.**

(30) Priorität: **25.05.79 DE 2921142**

(43) Veröffentlichungstag der Anmeldung: **07.01.81 Patentblatt 81/1**

(45) Bekanntmachung des Hinweises auf die Patenterteilung: **09.02.83 Patentblatt 83/6**

(84) Benannte Vertragsstaaten: **CH DE FR GB IT LI**

(56) Entgegenhaltungen:
**DE-A-2 013 104**
**DE-A-2 161 341**
**DE-A-2 457 754**
**DE-A-2 749 330**
**DE-B-1 275 054**
**DE-C-1 140 188**
**GB-A-1 498 697**
**US-A-2 732 398**
**US-A-3 875 227**

(73) Patentinhaber: **BAYER AG, Zentralbereich Patente, Marken und Lizenzen, D-5090 Leverkusen 1, Bayerwerk (DE)**

(72) Erfinder: **Mitschke, Karl-Heinz, Dr., Am Berg 22, D-5068 Odenthal (DE)**
Erfinder: **Niederprüm, Hans, Dr., Hofstrasse 27, D-4019 Monheim (DE)**

**EP 0 021 003 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verwendung von Perfluoralkansulfonamid-Salzen als Tenside

Die vorliegende Erfindung betrifft die Verwendung von Perfluoralkansulfonamiden, bzw. von Perfluoralkansulfonamid-Salzen als Tenside.

Die Alkalisalze der Perfluoralkansulfonamide sind an sich bekannte Verbindungen und fanden bisher Verwendung zur Herstellung von relativ kompliziert aufgebauten oberflächenaktiven Stoffen (vgl. z. B. US-A-2 803 656, US-A-2 803 615, US-A-2 809 990 und DE-C-1 140 188).

Es wurde nun gefunden, daß die Salze der Perfluoralkansulfonamide, insbesondere die der unsubstituierten Perfluoralkansulfonamide in Lösung hervorragende Tenside darstellen, die die Oberflächenspannung von z. B. Wasser schon bei sehr geringen Konzentrationen von ca. 0,2 g/l auf weniger als 20 dyn/cm herabsetzen. In gleicher Weise ergibt sich dieser Effekt bei den Amiden selbst im alkalischen Medium.

Gegenstand der vorliegenden Erfindung ist daher die Verwendung von Perfluoralkansulfonamid-Salzen der allgemeinen Formel

$$R_FSO_2N^{\ominus}\ M^{\oplus}$$
$$|$$
$$R$$

worin

$R_F$ für einen perfluorierten aliphatischen Rest mit 4 bis 20 C-Atomen,

R für Wasserstoff, einen Alkylrest mit 1–4 C-Atomen, Hydroxyalkylrest mit 1–4 C-Atomen oder einen Cycloalkylrest mit bis zu 6 C-Atomen,

M für ein Alkalimetall, Erdalkalimetall oder für einen Oniumrest der allgemeinen Formel $[ZR_2R_3R_4R_5]^{\oplus}$ steht, wobei Z Phosphor oder Stickstoff bedeutet und $R_2$ bis $R_5$ unabhängig voneinander Wasserstoff, Alkyl, Hydroxyalkyl oder Alkoxyalkyl mit 1–4 C-Atomen bedeuten,

als Tenside.

Überraschenderweise stellen derartige Verbindungen hochwirksame Tenside dar, die in ihrer Wirksamkeit den bekannten, meist recht kompliziert aufgebauten Substanzen mindestens ebenbürtig, wenn nicht gar überlegen sind.

Besonders bevorzugte Verbindungen sind folgende:

$C_4F_9SO_2NH_2 \cdot NH_3$;
$C_4F_9SO_2NHNa$;
$C_8F_{17}SO_2NH_2 \cdot NH_3$;
$C_8F_{17}SO_2NH_2 \cdot N(C_2H_5)_3$;
$C_8F_{17}SO_2N(CH_3)H \cdot NH_3$;
$C_8F_{17}SO_2N(CH_3)H \cdot N(C_2H_5)_3$;
$C_8F_{17}SO_2NH_2 \cdot N(CH_3)_3$;
$C_8F_{17}SO_2NH_2 \cdot NCH_3(CH_2CH_2OH)_2$;
$C_8F_{17}SO_2NHCH_3 \cdot N(CH_3)_3$;
$C_8F_{17}SO_2NHNa$;
$C_8F_{17}SO_2NHK$;
$C_{10}F_{21}SO_2NH_2 \cdot N(C_2H_5)_3$;
$C_{12}F_{25}SO_2NH_2 \cdot NH_3$;
$C_8F_{17}SO_2NH \cdot N(CH_3)_4$

Dabei werden die besten Ergebnisse mit den Verbindungen ab der $C_8$-Reihe erzielt.

Die erfindungsgemäß einzusetzenden Substanzen können in einfacher Weise durch Umsetzung von Perfluoralkansulfonamiden mit Basen in Gegenwart von Lösungsmitteln erhalten werden.

In einer allgemeinen Ausführung wird so verfahren, daß in eine berechnete Menge Lösungsmittel oder eines Lösungsmittelgemisches eine etwa äquimolare Menge Sulfonamid und Base bei einer Temperatur von ca. 20–70° C verrührt wird. Die erhaltene Lösung, deren Tensidgehalt nun bekannt ist, kann zur weiteren Verwendung benutzt werden.

Bei Verwendung von Lösungsmitteln in denen die Endprodukte unlöslich sind, können diese z. B. durch Filtration isoliert werden. Die Verwendung von Lösungen bringt jedoch Vorteile mit sich. Zum einen ist das Tensid bereits vorgelöst und braucht gegebenenfalls nur verdünnt werden und zum anderen ist die Dosierung von Lösungen einfacher als die eines Feststoffes oder hochviskosen Öles, insbesondere beim Einsatz in kontinuierliche Verfahren.

Es ist aber auch möglich, anstelle von Sulfonamid-Salzlösungen die freien Amide einzusetzen, wenn in alkalischem Medium gearbeitet wird. Diese Variante bringt aber keinen nennenswerten Vorteil mit sich, weil sich das freie Amid nur langsam löst und das als Tensid wirksame Salz sich erst bilden muß,

so daß erst nach längerer Zeit die maximale Tensidkonzentration erreicht wird.

Als Lösungsmittel werden Wasser und/oder organische, mit Wasser lösliche Lösungsmittel, wie z. B. Alkohole, Acetonitril, Dimethylformamid, Dimethylsulfoxid, Dioxan, Tetrahydrofuran, Aceton verwendet. Bei der Verwendung solcher Lösungsmittelgemische wird am zweckmäßigsten das Sulfonamid im organischen Lösungsmittel vorgelöst, die Base zudosiert und mit Wasser bis zur gewünschten Konzentration aufgefüllt.

Als Basen können Alkalihydroxide und insbesondere Stickstoffbasen verwendet werden, wie beispielsweise Ammoniak, primäre, sekundäre und/oder tertiäre Amine. Einige seien genannt wie z. B. Trimethylamin, Triäthylamin, Tripropylamin, Diäthylamin, Allylamin, Propylamin, Butylamin oder Alkanolamine, wie z. B. Diisopropanolamin oder Methyldiäthanolamin.

Prinzipiell sind alle Aminogruppen enthaltenden Verbindungen zu verwenden.

Die als Ausgangsmaterialien eingesetzten Perfluoralkansulfonamide werden nach bekannten Verfahren durch Umsetzung von Perfluoralkansulfonylfluoriden mit Ammoniak oder prim. Aminen hergestellt. Beispiele sind:

$C_4F_9SO_2NH_2$, $C_8F_{17}SO_2NH_2$, $C_4F_9SO_2NHCH_3$, $C_8F_{17}SO_2NHCH_3$,

$C_{10}F_{21}SO_2NH_2$, $C_{12}F_{25}SO_2NH_2$.

Die erfindungsgemäß zu verwendenden Tenside können aufgrund ihrer Eigenschaften für folgende Zwecke eingesetzt werden, wobei sie Benetzung, Durchdringung, Emulgierung, Dispergierung, Egalisierung, Verlauf, Fließeigenschaften, Schaumstabilität usw. verbessern:

Als Emulgator zur Polymerisation, insbesondere von Fluormonomeren;
in Gemischen mit Kohlenwasserstofftensiden zur Benetzung energiearmer Oberflächen, einschließlich Natur- und Synthesekautschuk, Harze- und Kunststoffe;
als Entformungsmittel für Silicone und dergleichen,
Benetzungshilfsmittel für Ölbohrungsbehandlungen, Bohrschlämme,
Schmutzablösungs- und Schmutzabweisungsmittel,
Netzmittel zur Verbesserung der Bedeckung und Durchdringung von Substratporen,
Netzmittel für Einheitlichkeit der Ausrüstung auf fertigem Garn,
Emulgator/Gleitmittel für Faserausrüstungen,
Zusatz zu Gewebeausrüstungen für Verlauf und Einheitlichkeit,
Netzmittel zum Färben,
Egalisier- und Kraterverhinderungshilfsmittel für Ausrüstungen und Anstrichmittel,
Verlaufmittel für Bodenwachse,
schaumbildende Substanz bei der Anwendung von Farbstoff und Druckfarben,
zur Verbesserung der Eigenschaften und des Eindringens von Mikrobenbekämpfungsmitteln,
Netzmittel für Herbizide, Fungizide, Unkrautvertilgungsmittel, Hormonwachstumsregler, Parasitenvertilgungsmittel, Insektizide, Germizide, Bakterizide, Nematozide, Mikrobiozide, Abblattungsmittel und Düngemittel,
Netzmittel für Reinigungsformulierungen,
Zusatz zu alkalischen Reinigungsmitteln.
Als Hilfsmittel in der Photographietechnik bzw. bei der Filmherstellung, so z. B. zur Verhinderung von
Runzelkorn in Gelatineschichten und zur Verbesserung der Gleichmäßigkeit,
als Hilfsmittel zum Filmtrocknen,
zur Verbesserung von Filmbeschichtungen und Verringerung von »Kontraktionsflecken«,
als Hilfsmittel zum Benetzen, Egalisieren und Verhindern von Kraterbildung,
Tensid für Entwicklerlösungen,
Photoemulsionsstabilisator,
Verhinderung des Verbackens von Photoschmiermitteln,
Beschichtungshilfe bei der Herstellung mehrschichtiger Filmelemente,
Antistatisches Netzmittel für Filmgüsse,
Verhinderung der Bildung von Randwülsten, sowie als Antischleiermittel für Filme.

Herstellung und erfindungsgemäße Verwendung der Perfluoralkansulfonamid-Salze sollen anhand der folgenden Beispiele noch näher erläutert werden:

## Beispiel 1

In 540 g Wasser wurden 50 g (0,1 Mol) Perfluoroctansulfonamid und 10 g (0,1 Mol) Triäthylamin unter Erwärmen eingetragen und solange gerührt bis sich eine klare Lösung gebildet hatte. Man erhielt auf diese Weise eine 10%ige wäßrige Lösung von $C_8F_{17}SO_2NH_2 \cdot N(C_2H_5)_3$. Die Substanz bewirkte eine

Oberflächenspannungserniedrigung auf ca. 16,8 dyn/cm bei einer Konzentration von nur 150 mg/Liter Wasser.

Die Lösung kann für praktische Anwendungen weiter verdünnt werden.

Beispiel 2

In einem Rührgefäß wurden in 600 g Äthanol 499,1 g (1 Mol) Perfluoroctansulfonamid gelöst und mit 101,2 g (1 Mol) Triäthylamin versetzt. Die klare Lösung wurde anschließend mit 4802 g Wasser unter Erwärmen vermischt. Man erhielt auf diese Weise eine 10%ige wäßrig-alkoholische Lösung der Verbindung entsprechend Beispiel 1.

Beispiel 3

In einem Rührgefäß wurden 46,5 g (0,09 Mol) Perfluoroctansulfonamid in 448 g Wasser aufgeschlemmt, bei ca. 50°C mit 5,2 g (0,09 Mol) Kaliumhydroxid versetzt und bis zur vollständigen Herstellung einer homogenen Lösung verrührt. Man erhielt eine 10%ige wäßrige Lösung von $C_8F_{17}SO_2NH^{\ominus}$ $K^{\oplus}$, die für den weiteren Gebrauch verdünnt werden kann.

Beispiel 4

20,2 g (0,04 Mol) Perfluoroctansulfonamid wurden in 225 g Wasser bei ca. 50°C aufgeschlemmt, mit 4,8 g (0,04 Mol) N-Methyl-diäthanolamin versetzt und solange gerührt bis eine klare Lösung sich gebildet hatte. Man erhielt auf diese Weise eine 10%ige wäßrige Lösung von $C_8F_{17}SO_2NH^{\ominus}$ $^{\oplus}NHCH_3(CH_2CH_2OH)_2$.

Beispiel 5

In 500 ml Äther wurden unter Rühren 249,6 g (0,5 Mol) Perfluoroctansulfonamid gelöst und bei Raumtemperatur mit gasförmigem Ammoniak gesättigt. Der sich gebildete Niederschlag wurde abfiltriert und getrocknet. Man erhielt 251 g (97% der Theorie) der Verbindung $C_8F_{17}SO_2NH^{\ominus}$ $^{\oplus}NH_4$ (Fp 151 – 153°C).

25 g dieser Verbindung wurden in 225 g warmen Wasser gelöst. Man erhielt auf diese Weise eine 10%ige wäßrige Lösung, die weiter verdünnt werden kann. Bei einer Konzentration von 250 mg Substanz/Liter Wasser wurde eine Oberflächenspannungserniedrigung auf 17,4 dyn/cm beobachtet.

Beispiel 6

Zu einer Suspension von 225 g Wasser und 18,7 g (0,063 Mol) Perfluoroctansulfonamid wurden 6,3 g (0,063 Mol) Triäthylamin gegeben und die Mischung bei ca. 50°C solange gerührt bis eine klare 10%ige wäßrige Lösung von $C_4F_9SO_2NH^{\ominus}$ $^{\oplus}NH(C_2H_5)_3$ entstanden war.

Beispiel 7

In 100 ml Methanol wurden 49,9 g (0,1 Mol) Perfluoroctansulfonamid gelöst und mit 5,6 g (0,1 Mol) Kaliumhydroxid bei ca. 50°C umgesetzt. Anschließend wurde das Lösungsmittel im Vakuum abgezogen und das entstandene $C_8F_{17}SO_2NH^{\ominus}$ $K^{\oplus}$ getrocknet.

13,4 g (0,025 Mol) dieser Verbindung wurden mit 4,1 g (0,025 Mol) Tetraäthylammoniumchlorid in 100 ml Isopropanol unter Rühren bei ca. 60°C umgesetzt. Nach dem Abkühlen der Reaktionsmischung wurde das ausgefallene Kaliumchlorid abfiltriert und das Filtrat eingeengt. Man erhielt in quantärer Ausbeute die Verbindung $C_8F_{17}SO_2NH^{\ominus}$ $^{\oplus}N(C_2H_5)_4$, die in Wasser gut löslich war und eine hohe Tensidwirkung zeigte.

Beispiel 8

In 448 g Wasser wurden 46,5 g (0,091 Mol) N-Methylperfluoroctansulfonamid und 5 g (0,09 Mol) Kaliumhydroxid eingetragen und bei ca. 50°C unter Rühren in Lösung gebracht. Man erhielt eine 10%ige wäßrige Lösung von $C_8F_{17}SO_2N^{\ominus}-CH_3K^{\oplus}$, die sich beim Verdünnen mit Wasser trübte bei Zugabe von Laugen jedoch wieder klar wurde.

## Beispiel 9

In 25 ml Methanol wurden 5,4 g (0,01 Mol) N-(2-Hydroxyäthyl)-perfluoroctansulfonamid gelöst und mit 1 g (0,01 Mol) Triäthylamin versetzt. Anschließend wurde das Lösungsmittel im Vakuum abgezogen. Man erhielt 6,4 g (quant.) der Verbindung

$C_8F_{17}SO_2N^{\ominus}-CH_2CH_2OH^{\oplus}NH(C_2H_5)_3$.

## Beispiel 10

Zu einer Suspension von 448 g Wasser und 47,9 g (0,096 Mol) Perfluoroctansulfonamid wurden 3,84 g (0,096 Mol) Natriumhydroxid gegeben und die Mischung bei ca. 50°C so lange gerührt, bis eine klare 10%ige wäßrige Lösung von $C_8F_{17}SO_2NHNa$ entstanden war.

## Beispiel 11

In 448 g Wasser wurden 49,4 g (0,099 Mol) Perfluoroctansulfonamid und 2,37 g (0,099 Mol) Lithiumhydroxid eingetragen und bei ca. 50°C unter Rühren in Lösung gebracht. Man erhielt eine 10%ige Lösung von $C_8F_{17}SO_2NHLi$.

## Beispiel 12

39,47 g (0,079 Mol) Perfluoroctansulfonamid wurden in 450 g Wasser bei ca. 50°C aufgeschlemmt, mit 10,53 g 0,079 Mol) Diisopropanolamin versetzt und solange gerührt bis eine klare Lösung sich gebildet hatte. Man erhielt eine 10%ige wäßrige Lösung von $C_8F_{17}SO_2NH_2 \cdot NH[CH_2-CH(CH_3)OH]_2$.

## Beispiel 13

In 896,5 g Wasser wurden 96,3 g (0,193 Mol) Perfluoroctansulfonamid und 7,15 g (0,097 Mol) Calciumhydroxid aufgeschlemmt und bei ca. 60°C solange gerührt bis eine 10%ige Lösung von $(C_8F_{17}SO_2NH)_2Ca$ entstanden war.

Mit allen Lösungen, die gemäß den Beispielen 8–13 hergestellt wurden, konnte eine sehr gute Tensidwirkung erzielt werden.

## Beispiel 14

Im folgenden wurden die erfindungsgemäßen Tenside mit einem sehr guten herkömmlichen Netzmittel(Tetraethylammonium-perfluoroctansulfonat) verglichen. Als Tensid diente ein Netzmittel gemäß Beispiel 1.

Die einer wäßrigen Lösung zugegebenen Netzmittel wurden an einer in der photographischen Industrie üblichen Begießmaschine gegenübergestellt.

Die Begießmaschine besteht aus einer Abrollung, die das zu begießende bahnförmige Material in Längen bis zu ca. 300 m (in Ausnahmen bis 3500 m) enthält. Das bahnförmige Material wird über Walzen zum Begießer geführt, dort mit einer oder mehreren Schichten begossen, anschließend wieder über Walzen einem Trockner zugeführt und in trockenen Zustand aufgerollt.

Beim Beguß des bahnförmigen Materials entsteht an den Begußrändern eine Verdickung der Schicht (genannt Randwulst), d. h. es entsteht eine überhöhte Naßschichtdicke, die als großer Nachteil u. a. zusätzliche Trockenkapazität erfordert.

Aus diesem Grunde sind Netzmittel erforderlich, die die Randwulstbildung reduziert, damit die Bahngeschwindigkeit erhöht werden kann.

Verwendung eines herkömmlichen Netzmittels (Tetraethylammonium-perfluoroctansulfonat)

| | |
|---|---|
| Unterlage: | PE (Polyethylen) 310 mit Emulsionsschicht |
| Begießgeschwindigkeit: | 60 m/min |
| wäßrige Lösung: | $\eta = 1$ mPas |
| Netzmittel: | $\sigma = 27,2 \frac{mN}{m}$; 15 ml/l |
| Begußbreite: | 120 mm |

| | |
|---|---|
| Begießer: | Kaskadengießer |
| Ergebnis: | dicker Randwulst, so daß die Bahngeschwindigkeit aufgrund dicker Randwulstbildung reduziert werden müßte, da sonst das Material beim Aufrollen zu den Rändern klebt und beim anschließenden Aufarbeiten reißt oder andere Nachteile zeigt. |
| Beispiel | mit dem Netzmittel entspr. Beispiel 1 gleiche Versuchsbedingungen wie im Vergleichsbeispiel $\sigma = 16{,}5 \frac{mN}{m}$, 15 ml/l |
| Ergebnis: | Erheblich geringere Randwulstbildung, so daß die Bahngeschwindigkeit erhöht werden konnte, ohne daß ein Verkleben der Ränder auftrat. |

**Patentansprüche**

1. Verwendung von Perfluoralkansulfonamid-Salzen als Tenside.
2. Verwendung von Salzen der Perfluoralkansulfonamide der allgemeinen Formel

$$R_FSO_2\underset{\displaystyle R}{\underset{|}{N}}{}^{\ominus} \quad M^{\oplus}$$

wobei

$R_F$ für einen perfluorierten aliphatischen Rest mit 4 bis 20 C-Atomen,
R für Wasserstoff, einen Alkylrest mit 1–4 C-Atomen, Hydroxyalkylrest mit 1–4 C-Atomen oder einen Cycloalkylrest mit bis zu 6 C-Atomen,
M für ein Alkalimetall, ein Erdalkalimetall oder für einen Oniumrest der allgemeinen Formel $[ZR_2R_3R_4R_5]^{\oplus}$ steht, wobei Z Phosphor oder Stickstoff bedeutet und $R_2$ bis $R_5$ unabhängig voneinander Wasserstoff, Alkyl, Hydroxyalkyl oder Alkoxyalkyl mit 1–4 C-Atomen bedeuten,

als Tenside.

3. Verwendung von Perfluoralkansulfonamid-Salzen als Tenside in der Phototechnik bzw. der Filmherstellung.
4. Verwendung von Perfluoralkansulfonamid-Salzen als Tensid bei der Ausrüstung von textilen Materialien.

**Claims**

1. Use of perfluoroalkanesulphonamide salts as surface active agents.
2. Use of salts of perfluoroalkanesulphonamides corresponding to the general formula

$$R_FSO_2\underset{\displaystyle R}{\underset{|}{N}}{}^{\ominus} \quad M^{\oplus}$$

wherein

$R_F$ denotes a perfluorinated aliphatic group having 4 to 20 C-atoms,
R denotes hydrogen, an alkyl group having 1–4 C-atoms, a hydroxyalkyl group having 1–4 C-atoms or a cycloalkyl group having up to 6 C-atoms, and
M denotes an alkali metal, an alkaline earth metal or an onium group of the general formula $[ZR_2R_3R_4R_5]^{\oplus}$ wherein Z denotes phosphorus or nitrogen and $R_2$ to $R_5$ denote, independently of each other, hydrogen, alkyl, hydroxyalkyl or alkoxyalkyl having 1–4 C-atoms, as surface active agents.

3. Use of perfluoroalkanesulphonamide salts as surface active agents in photography and the production of films.
4. Use of perfluoroalkanesulphonamide salts as surface active agents for the finishing of textile materials.

**Revendications**

1. Utilisation de sels de perfluoroalcanesulfonamides comme tensio-actifs.
2. Utilisations de sels de perfluoroalcanesulfonamides de formule générale

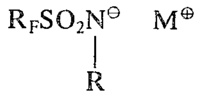

dans laquelle

$R_F$ représente un reste aliphatique perfluoré en $C_4-C_{20}$,

R représente l'hydrogène ou un reste alkyle en $C_1-C_4$, hydroxyalkyle en $C_1-C_4$ ou cycloalkyle jusqu'en $C_6$,

M représente un métal alcalin, un métal alcalino-terreux ou un reste onium de formule générale $[ZR_2R_3R_4R_5]^{\oplus}$ dans laquelle Z représente le phosphore ou l'azote et les restes $R_2$ à $R_5$ représentent indépendamment les uns des autres l'hydrogène ou un reste alkyle, hydroxyalkyle ou alcoxyalkyle en $C_1-C_4$,

comme tensio-actifs.

3. Utilisation de sels de perfluoroalcanesulfonamides comme tensio-actifs dans la technique photographique ou la production de films.
4. Utilisation de sels de perfluoroalcanesulfonamides comme tensio-actifs dans le finissage de matériaux textiles.